(19) Europäisches Patentamt
European Patent Office
Office européen des brevets

(11) **EP 2 717 221 A1**

(12) **EUROPEAN PATENT APPLICATION**
published in accordance with Art. 153(4) EPC

(43) Date of publication:
**09.04.2014 Bulletin 2014/15**

(51) Int Cl.:
**G06T 1/00** (2006.01)          **G06F 17/30** (2006.01)

(21) Application number: **12792926.3**

(22) Date of filing: **15.05.2012**

(86) International application number:
**PCT/JP2012/062406**

(87) International publication number:
**WO 2012/165135 (06.12.2012 Gazette 2012/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.05.2011   JP 2011119128**

(71) Applicant: **Osaka Prefecture University Public
Corporation
Osaka 599-8531 (JP)**

(72) Inventors:
• **IWAMURA, Masakazu
Sakai-shi
Osaka 599-8531 (JP)**

• **KISE, Koichi
Sakai-shi
Osaka 599-8531 (JP)**

(74) Representative: **Piotrowicz, Pawel Jan Andrzej et
al
Venner Shipley LLP
Byron House
Cambridge Business Park
Cowley Road
Cambridge CB4 0WZ (GB)**

(54) **DATABASE LOGGING METHOD AND LOGGING DEVICE RELATING TO APPROXIMATE
NEAREST NEIGHBOR SEARCH**

(57)     The present application relates to a method whereby a plurality of characteristic vectors which are extracted from image data are logged in a database together with the image data for approximate nearest neighbor searching, and has as an objective reducing computation time and memory use. L groups of K hash tables are generated, and each characteristic vector is respectively logged with each hash table. With one group as a copy destination, another group as a copy source, and each respective division by combination of logging bin of the K hash tables of each group as a bucket: 1) a given characteristic vector is focused on; 2) another characteristic vector which is logged in the same bucket in the copy source as the characteristic vector is identified; 3) a characteristic vector is selected in which a number of groups in which the other characteristic vector is logged in the same bucket as the characteristic vector which is focused on is greater than or equal to a prescribed threshold; and 4) when the characteristic vector which is selected in 3) is not logged in each bin of the copy destination in which the characteristic vector being focused on is logged, the characteristic vector is logged in each bin. After focusing on a prescribed number of characteristic vectors and executing 1) - 4) foregoing for each characteristic vector, the copy source hash tables are deleted.

Fig.4

**Description**

TECHNICAL FIELD

The present invention relates to a storage method and a storage device for image data into a database. More specifically, the present invention relates to a technique of approximate nearest neighbor search applied to searching on the database.

The database is used for object recognition, for example. The object recognition is processing of, when an image of an object is given as a retrieval query, searching for an image, i.e., an object, that is nearest to the query among images stored in an image database, by using a computer. It is noted that an object used herein refers to an object having a broad concept including a human and other creatures. In the processing procedure of searching, vector data (feature vector) representing a feature of an image is extracted from the image, and the extracted feature vector is stored together with the image into the image database such that the feature vector is associated with the image. When a query is given, a feature vector (query vector) is extracted from the query, to be compared with each feature vector stored in the image database. Among them, a feature vector that is nearest to the query vector is searched for. This searching is referred to as nearest neighbor search.

It is noted that the nearest neighbor search is used not only for object recognition but also in various other fields. For example, the nearest neighbor search is applied to, as well as a character recognition and image retrieval, statistic sorting of data, data compression, recommendation system for goods, etc., marketing, spell checker, DNA sequencing, and the like. The present invention can be applied to not only object recognition but also nearest neighbor search for vector data in these fields.

BACKGROUND ART

Nearest neighbor searching is a proposition of discovering vector data (hereinafter, simply referred to as data) $p \in S$ whose distance from a query vector (hereinafter, simply referred to as a query) q is shortest in a database S. In the nearest neighbor search, a correct answer can be always obtained by calculating the distances between a query and all pieces of data. This simple proposition becomes difficult to be solved if the scale of data to be processed is large. In some tasks, two billion vectors are stored in a database and object recognition is performed therefor (for example, see Non-Patent Literature 2). Therefore, it is essential to speed up nearest neighbor search.

For speedup of nearest neighbor search, it is effective to structure a database by using a tree structure or the like, to reduce the number of times of distance calculation (for example, see Non-Patent Literature 3). However, the structuring requires to also store information other than data, thus needing an increased memory use amount. It is considered that there is a tradeoff relationship between calculation time and memory use amount. There is no known algorithm in which calculation time logarithmically increases and memory use amount linearly increases with respect to a data number n processed in the case where a dimension number is greater than 2 (for example, see Non-Patent Literature 4).

In order to exceed this limit, approximate nearest neighbor search has been focused on in recent years. In the approximate nearest neighbor search, the conditions used in the nearest neighbor search are mitigated so that the nearest neighbor data does not always need to be obtained. The approximate nearest neighbor search can greatly reduce calculation time and memory use amount as compared to the nearest neighbor search which always obtains an exact nearest neighbor point. As representative techniques of approximate nearest neighbor search, Approximate Nearest Neighbor (ANN, for example, see Non-Patent Literature 4) using a tree structure, Locality Sensitive Hashing (LSH, for example, see Non-Patent Literatures 1 and 5) using hash, Spectral Hashing (for example, see Non-Patent Literature 6), Minwise Hashing (for example, see Non-Patent Literature 7), and the like are known. Vector data obtained by approximate nearest neighbor search is data estimated to be nearest to a query vector q, but is not always true nearest neighbor data.

CITATION LIST

NON-PATENT LITERATURE

Non-Patent Literature 1: M. Datar, N. Immorlica, P. Indyk, and V.S. Mirrokni, "Locality-sensitive hashing scheme based on p-stable distributions," Proc. 20th annual symposium on Computational geometry, pp. 253-262, 2004

Non-Patent Literature 2: Kise Koichi, Noguchi Kazuto, and Iwamura Masakazu, "Robust and Efficient Recognition of Low Quality Images by Increasing Reference Feature Vectors," IEICE Transactions, vol. J93-D, no. 8, pp.

1353-1363, Aug. 2010

Non-Patent Literature 3: Katayama Norio, Satoh Shin'ichi, "SR-Tree: An Index Structure for Nearest Neighbor Searching of High-Dimensional Point Data," IEICE Transactions, vol. J80-D 1, no. 8, pp. 703-717, Aug. 1997

Non-Patent Literature 4: S. Arya, D.M. Mount, N.S. Netanyahu, R. Silverman, and A.Y. Wu, "An optimal algorithm for approximate nearest neighbor searching in fixed dimensions," Journal of the ACM, vol. 45, no. 6, pp. 891-923, Nov. 1998

Non-Patent Literature 5: P. Indyk and R. Motwani, "Approximate nearest neighbor: towards removing the curse of dimensionality," Proc 30th Symposium on Theory of Computing, pp. 604-613, 1998

Non-Patent Literature 6: Y. Weiss, A. Torralba, and R. Fergus, "Spectral hashing," Advances in Neural Information Processing Systems, vol. 21, pp. 1753-1760, 2008

Non-Patent Literature 7: A.Z. Broder, M. Charikar, A.M. Frieze, and M. Mitzenmacher, "Min-wise independent permutations," Journal of Computer and System Sciences, vol. 60, pp. 630-659, 2000

## SUMMARY OF THE INVENTION

## DISCLOSURE OF THE INVENTION

In approximate nearest neighbor search, it is considered that there is a tradeoff relationship among accuracy (probability that nearest neighbor data is correctly obtained), calculation time, and memory use amount. Therefore, calculation time and memory use amount needed for realizing a certain level of accuracy become problems.

The present invention has been made considering the above circumstances, and provides a technique for reducing calculation time and memory use amount needed for realizing the same accuracy as compared to the conventional case, based on LSH which is one technique of approximate nearest neighbor search.

## SOLUTION TO THE PROBLEMS

The present invention provides a storage method for database, including steps of, by a computer: extracting a plurality of feature vectors from image data, each feature vector representing a feature of the image data; and storing the extracted feature vectors in conjunction with the image data into a database, wherein the storing step includes sub-steps of: generating L groups of hash tables, each group being composed of K hash tables (K and L are integers equal to or greater than 2), to store each feature vector into one of a plurality of bins for sort of the feature vectors in each hash table; storing each feature vector into each corresponding hash table of each group; determining one of the groups as a copy destination, other groups as copy sources, and sort by a combination of the storage bins of the K hash tables of each group as a bucket; (1) focusing on one of the feature vectors; (2) specifying any other feature vectors stored in the same bucket as the focused feature vector in each copy source; (3) counting the number of groups in which each of the other feature vectors and the focused feature vector are stored in the same bucket and selecting each of the other feature vectors for which the number is equal or greater than a predetermined threshold value; (4) storing each of the feature vectors selected in the sub-step (3) into each bin in the copy destination in which the focused feature vector is stored, in case where the selected feature vector has not been stored into the bin; and deleting the hash tables of the copy sources after focusing a predetermined number of the feature vectors and executing the sub-steps (1) to (4) for each focused feature vector, and wherein the database is used for, when image data as a retrieval query is given, after a plurality of query vectors representing a feature of the image data are extracted, finding a feature vector that matches to each query vector from the database by approximate nearest neighbor search, to determine the image corresponding to the retrieval query.

In other words, in the storage method for database, the computer executes a step of extracting feature vectors from image data, each feature vector representing a feature of the image data, and a step of storing the extracted feature vectors in conjunction with the image data into a database. The database is used for, when image data as a retrieval query is given, after query vectors are extracted from the image data, searching for a feature vector that is estimated to be the nearest neighbor of the query vector. In the storing step, L groups of hash tables are generated, each group being composed of K hash tables (K and L are integers equal to or greater than 2), to sort and store each feature vector into one of bins, and then each feature vector is stored into each corresponding hash table. Thereafter, (i) one of the stored feature vectors is selected and any other feature vectors sorted into the same storage bin as the selected feature vector are specified, (ii) for each group, a set of other feature vectors stored in all of K storage bins of the group is defined as a bucket of the group, (iii) a feature vector contained in a predetermined number of or more buckets among a total of L buckets is obtained, and (iv) the obtained feature vector is additionally stored into each storage bin of hash tables of a first group. After the additional storage according to the sub-steps (i) to (iv) is executed for a predetermined number of feature vectors, hash tables of the groups other than the first group are deleted.

In addition, the present invention in another aspect provides a storage device for database, including: a processing section for extracting a plurality of feature vectors from image data, each feature vector representing a feature of the image data; and a storage section for storing the extracted feature vectors in conjunction with the image data into a database, wherein the storage section performs operations of: generating L groups of hash tables, each group being composed of K hash tables (K and L are integers equal to or greater than 2), to store each feature vector into one of a plurality of bins for sort of the feature vectors in each hash table; storing each feature vector into each corresponding hash table of each group; determining one of the groups as a copy destination, other groups as copy sources, and sort by a combination of the storage bins of the K hash tables of each group as a bucket; (1) focusing on one of the feature vectors; (2) specifying any other feature vectors stored in the same bucket as the focused feature vector in each copy source; (3) counting the number of groups in which each of the other feature vectors and the focused feature vector are stored in the same bucket and selecting each of the other feature vectors for which the number is equal or greater than a predetermined threshold value; (4) storing each of the feature vectors selected in the operation (3) into each bin in the copy destination in which the focused feature vector is stored, in case where the selected feature vector has not been stored into the bin; and deleting the hash tables of the copy sources after focusing a predetermined number of the feature vectors and executing the operations (1) to (4) for each focused feature vector, and wherein the database is used for, when image data as a retrieval query is given, after a plurality of query vectors representing a feature of the image data are extracted, finding a feature vector that matches to each query vector from the database by approximate nearest neighbor search, to determine the image corresponding to the retrieval query.

In other words, the storage device for database includes a processing section for extracting feature vectors from image data, each feature vector representing a feature of the image data, and a storage section for storing the extracted feature vectors in conjunction with the image data into a database. The database is used in a searching device for, when image data as a retrieval query is given, after query vectors are extracted from the image data, searching for a feature vector that is estimated to be the nearest neighbor of the query vector. In the storage section, L groups of hash tables are generated, each group being composed of K hash tables (K and L are integers equal to or greater than 2), to sort and store each feature vector into one of bins, and then each feature vector is stored into each corresponding hash table. Thereafter, (i) one of the stored feature vectors is selected and any other feature vectors sorted into the same storage bin as the selected feature vector are specified, (ii) for each group, a set of other feature vectors stored in all of K storage bins of the group is defined as a bucket of the group, (iii) a feature vector contained in a predetermined number of or more buckets among a total of L buckets is obtained, and (iv) the obtained feature vector is additionally stored into each storage bin of hash tables of a first group. After the additional storage according to the operations (i) to (iv) is executed for a predetermined number of feature vectors, hash tables of the groups other than the first group are deleted.

EFFECTS OF THE INVENTION

In the storage method according to the present invention, after a feature vector contained in a predetermined number of or more buckets is stored into each storage bin of hash tables of a copy destination, hash tables of copy sources are deleted. Therefore, based on LSH which is one technique of approximate nearest neighbor search, calculation time and memory use amount needed for realizing the same accuracy can be reduced as compared to the conventional technique. That is, a memory for storing (L - 1) groups of hash tables of the copy sources can be reduced, and time needed for searching in the (L - 1) groups of hash tables of the copy sources can be reduced. It is noted that the technique of approximate nearest neighbor search according to the present invention can be applied not only in place of the conventional approximate nearest neighbor search using LSH but also in place of approximate nearest neighbor search according to other techniques.

Also the storage device according to the present invention provides the same operation and effect as in the storage method.

For thus reducing calculation time and memory use amount as calculation resources, it seems general that, as performed in identification devices using nearest neighbor search, reduction of the number of data stored in a database is considered (for example, see Wada Toshikazu, "Classification using space decomposition and learning of non-linear mapping: (1) Acceleration Method for Nearest Neighbor Classification based on Space Decomposition," Journal of Information Processing, vol. 46, no. 8, pp. 912-918, Aug. 2005). On the other hand, the present invention redundantly stores data stored in a database to increase the number of data to be stored into the database, thereby realizing the above reduction. Although the technique of the present invention appears to be paradoxical, it was confirmed by experiments that the present invention can realize the same level of accuracy with 18% of calculation time and 90% of memory use amount as compared to LSH as the conventional technique. Further, the factor thereof can be explained by using a criterion p for searching efficiency of LSH shown in the above Non-Patent Literature 1.

In the present invention, from data to be stored into a database, one feature vector may be extracted or a plurality of feature vectors may be extracted. As a technique for extracting a feature vector from data, a known technique can be applied. For example, in the experiments described later, an extraction technique for LBP feature is used.

However, the present invention is not limited thereto. For example, SIFT and other techniques which are known can be used for local feature quantities.

In addition, in the present invention, a query vector is extracted by using the same technique as used for extraction of each feature vector.

In the present invention, one bucket is specified by using K hash tables. Then, a feature vector to be estimated to be nearest to a query vector is determined from among feature vectors stored in a copy-destination bucket corresponding to the query vector.

According to the storage method of the present invention, K ×L hash tables are temporarily generated upon storage, but feature vectors are additionally stored into K hash tables of a copy destination and then eventually hash tables of copy sources are deleted.

Therefore, for the searching, the K hash tables of the copy destination are used.

BRIEF DESCRIPTION OF THE DRAWINGS

[FIG. 1] FIG. 1 is an explanation diagram showing refining of distance calculation targets in conventional LSH.
[FIG. 2] FIG. 2 is an explanation diagram for description of a locality-sensitive hash function in conventional LSH.
[FIG. 3] FIG. 3 is a first explanation diagram showing approximate nearest neighbor search according to the present invention.
[FIG. 4] FIG. 4 is a second explanation diagram showing the approximate nearest neighbor search according to the present invention.
[FIG. 5] FIG. 5 is graphs of an experiment result showing that the approximate nearest neighbor search according to the present invention is effective in terms of processing time.
[FIG. 6] FIG. 6 is graphs of an experiment result showing that the approximate nearest neighbor search according to the present invention is effective in terms of memory use amount.
[FIG. 7] FIG. 7 is graphs showing a probability that data is searched for y times in copy-source hash function groups in the approximate nearest neighbor search according to the present invention.
[FIG. 8] FIG. 8 is graphs showing a relationship between a threshold value t and a probability that data is additionally stored in the approximate nearest neighbor search according to the present invention.
[FIG. 9] FIG. 9 is an explanation diagram showing the structure of a database for object recognition using conventional LSH.

DESCRIPTION OF EMBODIMENTS

Hereinafter, preferred embodiments of the present invention will be described.

The approximate nearest neighbor search may be processing for applying K hash functions to each query vector to determine a bucket, obtaining at least one feature vector stored in the bucket, and comparing the query vector with the feature vector. Thus, only the hash tables of the copy destination in which the feature vectors have been additionally stored are used, so that the searching can be performed without using the hash tables of the copy sources which have been deleted.

In addition, the storing step may determine a feature vector to be focused on by using uniform random numbers. Under the assumption that the distribution of feature vectors contained in buckets upon storage is the same as the distribution of query vectors that correspond to buckets through plural times of searching, if feature vectors to be additionally stored are selected based on uniform random numbers, the number of times of correspondence for a bucket having a dense distribution of feature vectors is large while the number of times of correspondence for a coarse bucket is small. Therefore, the additional storage can be executed many times for a bucket into which many query vectors are expected to be inputted.

Further, the storing step may refrain from storing the feature vector selected in the sub-step (3) into each bin in the copy destination in which the focused feature vector is stored, in case where the selected feature vector has been stored into the bin. Thus, redundant storage of the same feature vector is prevented, thereby avoiding wastefully spending calculation time due to redundant distance calculation upon searching.

The storing step may be executed based on the numbers K and L that are determined in advance. Then, feature vectors of a number corresponding to a predetermined ratio with respect to the feature vectors to be stored may be selected for the additional storage, so that a feature vector contained in a predetermined number of or more buckets may be additionally stored. These values are represented by K, L, β, and t in the experiments, and a probability that a true nearest neighbor point is searched for can be increased by setting appropriate values. Therefore, such preferred values can be determined experientially or analytically in advance.

In addition, the database may include a correspondence table storing vector data of each feature vector and an identifier of said feature vector in an associated manner, and the hash tables, and each hash table may indicate each feature vector stored in each bin by using the identifier thereof. Thus, since it is sufficient to store identifiers, memory use amount for each hash table can be reduced as compared to the case of storing vector data into each hash table.

Further, the approximate nearest neighbor search may calculate a distance between the query vector and each feature vector, and determine a nearest neighbor feature vector based on the calculated distances. Thus, a feature vector that is the nearest neighbor of a query vector can be determined by distance calculation of vectors.

Some of the various preferred modes shown above may be combined.

Hereinafter, the present invention will be described in further detail with reference to the drawings. It is noted that the following description is in all aspects illustrative and it should not be understood that the following description limits the present invention.

«Explanation of conventional LSH (Locality Sensitive Hashing) as basis»

Before the detailed description of the present invention, first, conventional LSH as a basis thereof will be described. Here, p-stable LSH (see the above Non-Patent Literature 1) targeting vector data will be described.

Approximate nearest neighbor search by LSH is realized by the following two steps.

> (1) Data for which a distance from a query is to be calculated, that is, distance calculation targets are selected.
> (2) A distance from a query is calculated for the distance calculation targets selected in step (1), and nearest neighbor data is determined based thereon.

Here, it should be noted that approximate processing is not included in step (2). That is, the searching is always successful as long as true nearest neighbor data is included in the distance calculation targets selected in step (1). Hereinafter, how to realize the processing of step (1) which determines accuracy in LSH, that is, refining of distance calculation targets will be described.

Refining of distance calculation target by LSH

First, a hash function h(v) used in LSH, given by the following expression, will be described.

[Mathematical 1]

$$h(\boldsymbol{v}) = \left\lfloor \frac{\boldsymbol{a} \cdot \boldsymbol{v}}{w} \right\rfloor \tag{1}$$

Here, data p or a query q is given to an argument v. A character "a" denotes a d-dimensional vector for projection of data, and is defined in accordance with a d-dimensional normal distribution. A character "w" denotes a hash width, which is a parameter for determining the width of a bin.

It is noted that in expression (1), a term b which is not important here is omitted. An original hash function is given by the following expression.

[Mathematical 2]

$$h(\boldsymbol{v}) = \left\lfloor \frac{\boldsymbol{a} \cdot \boldsymbol{v} + b}{w} \right\rfloor$$

Here, $b_{ji}$ is a real number determined by uniform random numbers from an interval [0, w].

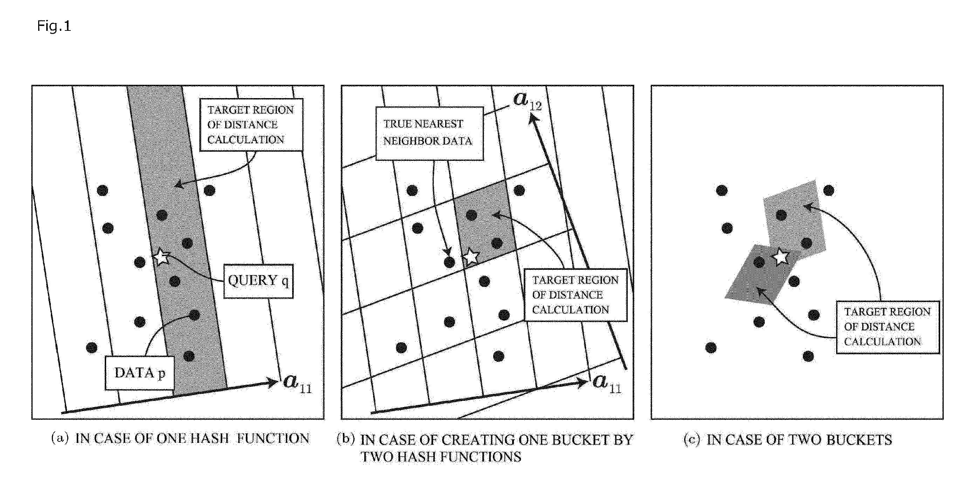

FIG. 1 shows refining of distance calculation targets by using a hash function of expression (1) in LSH. In FIG. 1, a star denotes a query q and a circle denotes data p.

First, FIG. 1(a) shows determination of distance calculation targets by using only one hash function. To describe a result beforehand, data present in an area with a gray background in the drawing represents the distance calculation targets. Thus, in LSH, using the hash function of expression (1), only data having the same hash value (index) as that of a query is treated as a distance calculation target. For the calculation, the aforementioned vector a is used. To explain geometrically, a hash value is determined based on which of bins partitioned at regular intervals data or a query a belongs to when the data or the query a is projected onto the vector. Data contained in the same bin as a query has the same hash value, and therefore is treated as a distance calculation target. This is exactly defined that "all data pieces p that satisfy h(q) = h(p) are treated as distance calculation targets".

It is noted that strictly speaking, a data structure that, by using a hash function, data is sorted and stored into a plurality of bins in order to quickly refer to a value corresponding to certain reference data (key), is referred to as a hash table, and a hash function in a narrow sense refers to a function that gives a value (hash value) indicating a bin corresponding to a certain key. However, as used herein, the data structure and the function are considered to be a unified indivisible concept so that they are not discriminated. Therefore, a term "hash function" or "hash function group" is used for indicating the data structure as well as indicating a hash function in a narrow sense. It is noted that on different hash tables, data is stored using respective different hash functions (in a narrow sense).

Next, FIG. 1(b) will be referred to. By carefully looking at FIG. 1(a), it is found that a point far from a query is also included in the distance calculation targets. This state is inefficient in terms of reduction of the distance calculation targets. Accordingly, as shown in FIG. 1(b), the distance calculation targets are further refined using a plurality of (K) hash functions. Here, a hash function group composed of the K hash functions is defined by the following expression.

[Mathematical 3]

$$g_i(\boldsymbol{v}) = \{h_{i1}(\boldsymbol{v}), h_{i2}(\boldsymbol{v}), \ldots, h_{ik}(\boldsymbol{v})\} \qquad (2)$$

The plurality of hash functions are discriminated by suffixes. This is the reason why the vector a in FIG. 1 has a suffix like $a_{ji}$. The first suffix j denotes the number of a bucket. The second suffix i denotes a hash function. Here, a product set of distance calculation targets of these hash functions is referred to as a bucket, and data included in a bucket (gray-background area in FIG. 1(b)) in which a query is present is treated as a distance calculation target.

Here, referring to FIGS. 1(a) and 1(b) again, it is found that actually, true nearest neighbor data is not included in the distance calculation targets in either figure. Accordingly, in order to increase a probability that the true nearest neighbor data will be included in the distance calculation targets, a plurality of (L) buckets are used as shown in FIG. 1(c). Then, a union of the distance calculation targets of these buckets is treated as final distance calculation targets. In FIG. 1(c), data included in either of two gray-background areas is treated as distance calculation targets.

Here, the structure of the database will be briefly described. A database S is, specifically, composed of a plurality of hash tables (group of data structures using hash functions, i.e., hash function group). When data is stored into the database S, a correspondence table 11 in which ID of the data, vector data of feature vectors extracted from the data, and vector IDs are included in an associated manner is stored into a memory. The vector IDs are stored into bins of a hash table. Bins of hash to be stored are calculated by using expression (1). It is noted that in the case of collision, such vectors are linked into a list structure.

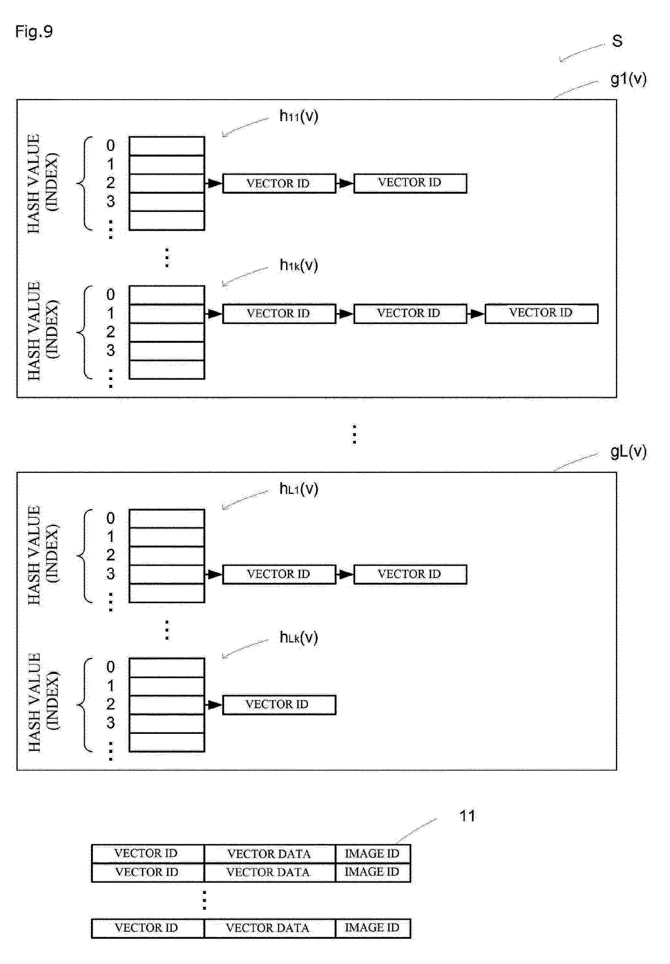

FIG. 9 is an explanation diagram showing the structure of a database according to object recognition in the case of applying conventional LSH. In the example of FIG. 9, approximate nearest neighbor search is performed using L hash function groups $g_i(v)$ composed of K hash functions. In this case, (L × K) hash tables corresponding to respective base vectors are temporarily secured in a memory. It is noted that in the present invention, unlike the conventional technique, eventually, K hash tables corresponding to a copy-destination hash function group are left while the other hash tables are deleted from a memory.

FIG. 9 will be described in association with FIG. 1. In the case of one hash function as shown in FIG. 1(a), the database includes one hash table $h_{11}(v)$. In the case of two hash functions as shown in FIG. 1(b), the database includes a hash function group $g_1(v)$ composed of two hash tables $h_{11}(v)$ and $h_{12}(v)$. In the case of two buckets as shown in FIG. 1(c), the database includes two hash function groups $g_1(v)$ and $g_2(v)$.

Relationship between bucket number L and performance of LSH

The performance of LSH is determined by, besides w used in a hash function, two parameters, i.e., the number K of hash functions and the bucket number L. Among them, regarding the bucket number L, relationships with accuracy, calculation time, and memory use amount will be described.

i) Accuracy: Along with increase in the bucket number L, the number of distance calculation targets monotonously increases. Therefore, the accuracy monotonously increases.

ii) Calculation amount: Along with increase in the bucket number L, a hash table number to be referred to monotonously increases, and the number of distance calculation targets also monotonously increases. Therefore, the calculation amount monotonously increases.

iii) Memory use amount: In LSH, a memory is used in structuring a hash table. Along with increase in the bucket number L, a required hash table number monotonously increases, and therefore the memory use amount also monotonously increases.

Locality-sensitive hash function and searching efficiency

The searching efficiency of a locality-sensitive hash function is shown in Non-Patent Literature 1. This will be shown here as a basis for analysis described later.

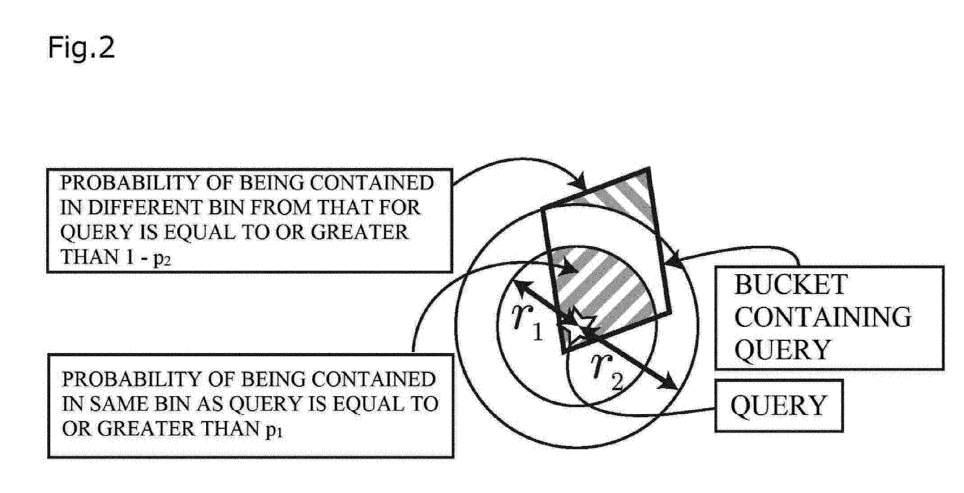

The hash function of expression (1) is called a locality-sensitive hash function. The locality-sensitive hash function means such a hush function that vectors close to each other are highly likely to take the same hash value and vectors far from each other are less likely to take the same hash value. This is specifically defined by the following expression. In addition, FIG. 2 shows the following description as a diagram.

[Mathematical 4]

$$
\begin{cases}
\mathrm{P}[h(\boldsymbol{q}) = h(\boldsymbol{p})] \geq p_1 & \text{for } \boldsymbol{p} \in B(\boldsymbol{q}, r_1) \\
\mathrm{P}[h(\boldsymbol{q}) = h(\boldsymbol{p})] \leq p_2 & \text{for } \boldsymbol{p} \notin B(\boldsymbol{q}, r_2)
\end{cases}
\tag{3}
$$

Here, B(q, r) denotes a set of points present within a radius r from a query q. According to expression (3), a point present within a distance $r_1$ from a query q has the same hash value as that of the query with a probability of $p_1$ or higher, and a point present beyond a distance $r_2$ from a query q has a different hash value from that of the query with a probability of $(1 - p_2)$ or higher. Here, $r_1 < r_2$ and $p_1 > p_2$ are satisfied.

The searching efficiency of LSH using a locality-sensitive hash function is described by a criterion p obtained by the following expression.

[Mathematical 5]

$$
\rho = \frac{\log 1/p_1}{\log 1/p_2}
\tag{4}
$$

The value p is small if the probability $p_1$ that the nearest neighbor point is present within the distance $r_1$ from a query q is high, and the value p is small if the probability $p_2$ that the nearest neighbor point is present beyond the distance $r_2$ from a query q is low. Therefore, it is preferable that the value p is small.

According to Non-Patent Literature 1, necessary memory use amount is represented by $O(dn + n^{1+\rho})$, and most of calculation time is occupied by $O(n^\rho)$ times of distance calculation. Here, O(M) or $O(M^\rho)$ is a notation of approximate calculation amount needed for solving a problem. For example, O(M) indicates that when M is given, the calculation amount falls within $\alpha_1 M + \alpha_2$, where $\alpha_1$ and $\alpha_2$ are constants. In addition, for example, $O(M^3)$ indicates that the calculation amount falls within $\alpha_1 M^3 + \alpha_2 M^2 + \alpha_3 M + \alpha_4$, where $\alpha_1$, $\alpha_2$, $\alpha_3$, and $\alpha_4$ are constants. In addition, d is a dimension number of vector data, and n is the number of vector data to be treated. In this case, $O(n^\rho \log 1/_{p2} n)$ times of evaluation for hash functions are needed.

«Technique of nearest neighbor search according to the present invention»

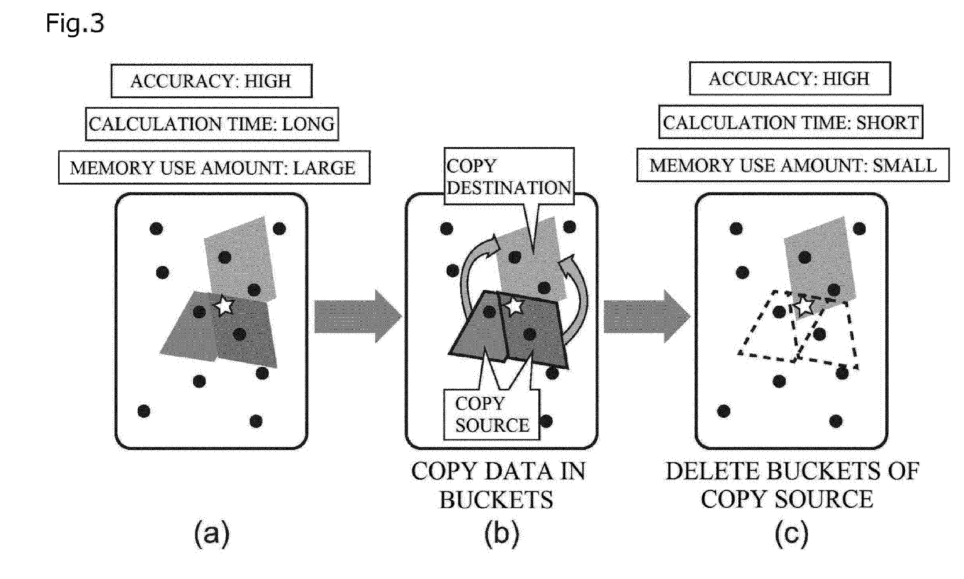

The present invention proposes, in the technique of approximate nearest neighbor search, a technique for reducing calculation time and memory use amount by redundantly storing data into a database. FIG. 3 shows a summary of the technique of the present invention. First, in FIG. 3(a), LSH with a comparatively large bucket number L is structured. Then, as shown in FIG. 3(b), information in buckets ("copy source" buckets) other than one bucket ("copy destination" bucket) is copied into the copy-destination bucket, and the copy-source buckets are deleted as shown in FIG. 3(c). Thus, performance obtained in the case of a large bucket number can be realized by only a small number of buckets.

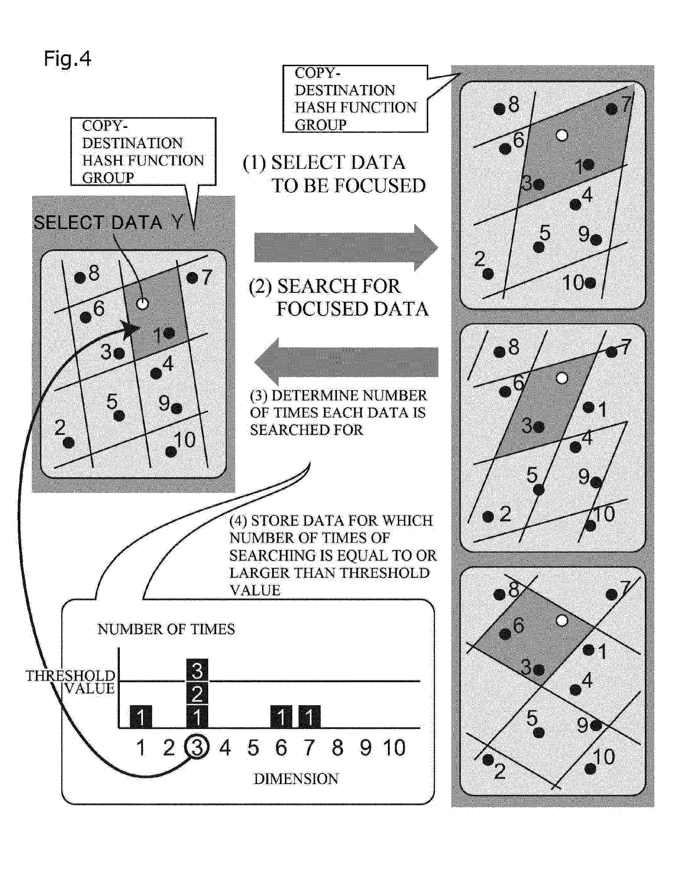

Hereinafter, the details of processing of the technique of the present invention will be described with reference to FIG. 4. First, instead of the "copy-source bucket" and the "copy-destination bucket" described above, a "copy-source hash function group" and a "copy-destination hash function group" are created. In either LSH of the "copy-source hash function group" and the "copy-destination hash function group", the same data is stored but a hash function and a bucket differ.

Step (1): One of data pieces stored in a copy-destination hash function group is selected. For convenience of description, this data piece is referred to as Y.

Step (2): Regarding Y as a query, searching is performed in copy-source hash function groups.

Step (3): For each data piece contained in the same bucket as the data Y in the copy-source hash function groups, the number of times the data piece is contained in the same bucket is counted.

Step (4): Only a data piece for which the number of times the data piece is contained in the same bucket is equal to or larger than a threshold value t is selected and additionally stored into the bucket to which the data Y belongs in the copy-destination hash function group. It is noted that if the data piece has been already stored, the data piece is not additionally stored.

Such processing is performed for a certain number of data pieces while a data piece as Y is sequentially changed. A ratio of data used in the processing with respect to the whole data is denoted by $\beta$ ($0 \le \beta \le 1$). Finally, the copy-source hash function groups are discarded, and the copy-destination hash function group is used in place of normal LSH. That is, a database is structured such that only a hash table of the copy-destination hash function group is left and a memory area in which hash tables of the copy-source hash function groups have been present is released. It is noted that in LSH, there is no concept of "storing into bucket", but in fact, a bucket is determined by obtaining a product set of distance calculation targets stored in the bins of each hash table in the database. Therefore, in the additional storage of data into a bucket, specifically, the data is stored into all hash functions composing the bucket.

It is effective to execute such additional storage of data for a bucket in which, when an image of an object is given as a query, a large number of query vectors corresponding to the image occur. Under the assumption that the distribution of data is the same as the distribution of queries, if a data piece as Y is selected based on uniform random numbers, a bucket having a dense data distribution is selected many times while a coarse bucket is selected few times. Therefore, the additional storage of data is executed many times for a bucket in which many queries occur as described above. Therefore, here, under the assumption that the distribution of data is the same as the distribution of queries, a data piece as Y is selected based on uniform random numbers.

It is noted that the present embodiment is configured such that memory use amount does not greatly increase due to the redundant storage of data. Specifically, a table for retaining vector data to be used for distance calculation is prepared separately from a hash table, and only numbers of data pieces having respective hash values are retained in the hash table. Thus, increase in memory use amount due to the redundant storage corresponds to only an amount for representing numbers of data pieces.

«Experiments»

Experiments for confirming effectiveness of the present invention were conducted by comparing results of conventional LSH and the approximate nearest neighbor search technique of the present invention. In the experiments, 754,200 images included in a Multi-PIE Face database (see R. Gross, I. Matthews, J. Cohn, T. Kanade, and S. Baker, "Multi-pie," Proc. 8th IEEE Int'l Conf. on Automatic Face and Gesture Recognition, 2008) were subjected to face detection (see T. Mita, T. Kaneko, B. Stenger, and O. Hori, "Discriminative feature co-occurrence selection for object detection," IEEE Trans. PAMI, pp. 1257-1269, July 2008). The obtained 316,089 images were normalized (see T. Kozakaya and O. Yamaguchi, "Face recognition by projection-based 3d normalization and shading subspace orthogonalization," Proc 7th Int' Conf. on Automatic Face and Gesture Recognition, pp. 163-168, 2006). From the resultant data, 928-dimensional LBP features (see T. Ahonen, A. Hadid, and M. Pietikainen, "Face description with local binary patterns: Application to face recognition," IEEE Trans. PAMI, vol.28, not. 12, pp. 2037-2041, Dec. 2006) were extracted. Further, the resultant data was compressed by principal component analysis into 100 dimensions. From these feature vectors, 10,000 feature vectors were randomly selected for storage into a database, and other 10,000 feature vectors were selected for queries.

Nearest neighbor data was obtained in advance by full searching, and a rate at which approximate nearest neighbor data obtained by the approximate nearest neighbor search technique coincided with the corresponding nearest neighbor data was obtained as accuracy. Opteron 6174 (2.2GHz) was used as a calculator. The value of parameter $\beta$ relevant to the number of data pieces used for additional storage was set at 0.001, 0.01, and 0.1. These values mean that 10 pieces of data, 100 pieces of data, and 1,000 pieces of data were used for additional storage, respectively.

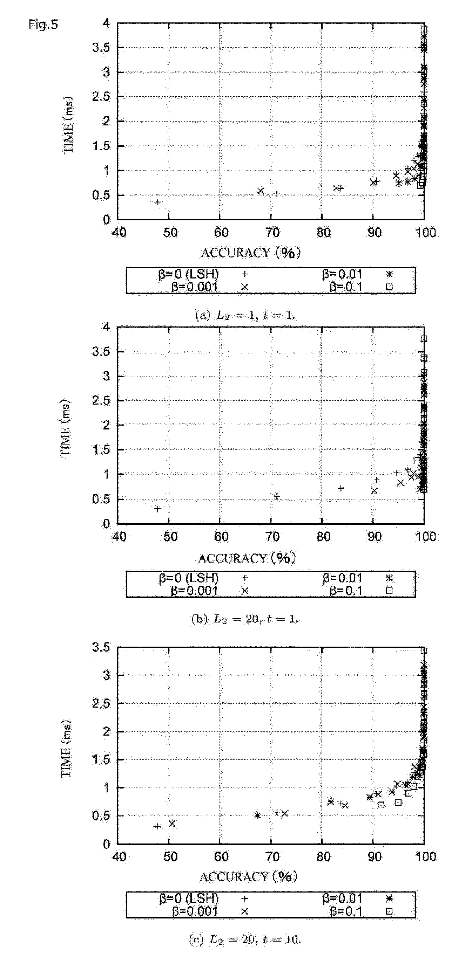

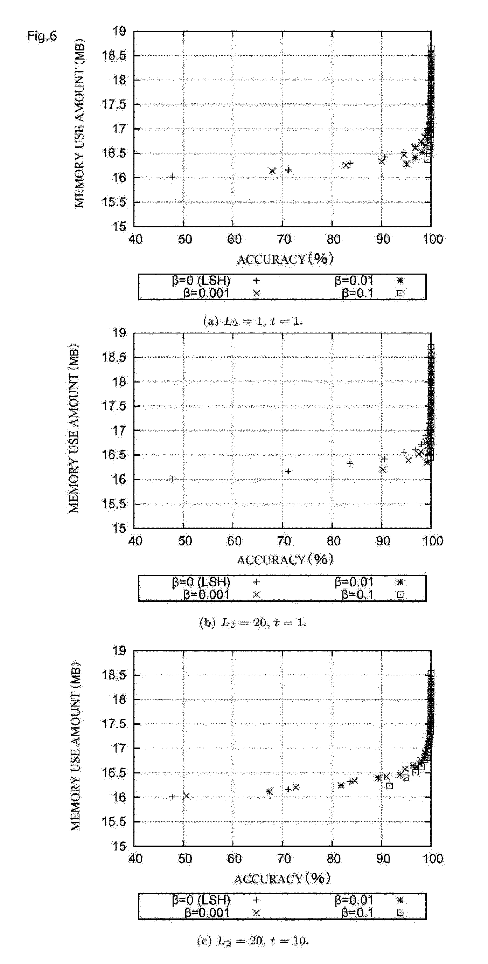

FIG. 5 shows graphs representing the relationship between accuracy and processing time. FIG. 6 shows graphs representing the relationship between accuracy and memory use amount. In experiments of FIGS. 5 and 6, parameters relevant to the number of hash functions used for refining distance calculation targets were $k_1 = k_2 = 1$, and parameters relevant to the hash width were $w_1 = w_2 = 1,000$. These parameters were common among the graphs. In addition, Table 1 shows some of comparison results among accuracy, calculation time, and memory use amount. In the experiments of Table 1, $k_1 = k_2 = 1$ and $w_1 = w_2 = 1,000$ were used as parameters. Parameters for a copy-destination hash function group are indicated by providing a suffix 1 like $w_1$, $k_1$, and $L_1$, and parameters for a copy-source hash function group are indicated by providing a suffix 2 like $w_2$, $k_2$, and $L_2$. A parameter t in Table 1 is a threshold value for the number of times each data is contained in the same bucket as data Y as a query, so that data is stored when the number of times is equal to or greater than the threshold value.

[Table 1]

| Technique | Parameters | | | Accuracy (%) | Calculation time (ms) | Memory use amount (MB) |
|---|---|---|---|---|---|---|
| | $\beta$ | $L_2$ | $t$ | | | |
| LSH($L = 1$) | | | | 46.5 | 0.32 | 16.0 |
| LSH($L = 20$) | | | | 99.9 | 3.91 | 18.3 |
| Present invention ($L_1 = 1$) | 0.001 | 1 | 1 | 68.0 | 0.54 | 16.0 |
| | 0.01 | 1 | 1 | 93.9 | 0.73 | 16.2 |
| | 0.1 | 1 | 1 | 99.3 | 0.69 | 16.4 |
| Present invention ($L_1 = 1$) | 0.001 | 20 | 1 | 90.2 | 0.66 | 16.2 |
| | 0.01 | 20 | 1 | 99.2 | 0.72 | 16.4 |
| | 0.1 | 20 | 1 | 99.9 | 0.69 | 16.4 |
| Present invention ($L_1 = 1$) | 0.001 | 20 | 10 | 49.1 | 0.34 | 16.0 |
| | 0.01 | 20 | 10 | 65.4 | 0.47 | 16.0 |
| | 0.1 | 20 | 10 | 90.1 | 0.63 | 16.2 |

From FIGS. 5 and 6, it is found that, as compared to LSH of the conventional technique, accuracy of the technique of the present invention has been significantly improved under the same processing time or memory use amount. Therefore, in comparison under the same level of accuracy, it is found that both processing time and memory use amount have been reduced. In Table 1, in the case of $\beta = 0.1$, $L_2 = 20$, and $t = 1$, accuracy of 99.9%, calculation time of 0.69ms, and memory use amount of 16.4MB have been achieved. In the LSH, in the case of $L = 20$, accuracy is 99.9%, calculation time is 3.91ms, and memory use amount is 18.3MB. Therefore, in comparison therebetween, it is found that calculation time has been reduced to 18% and memory use amount has been reduced to 90%. This is considered to be attributable to the fact that the number L of hash function groups needed for achieving the same level of accuracy as in the LSH is small. In comparison of performance when $L_2$ and $t$ are changed, the performance is improved when $L_2$ is large, and the performance is deteriorated when $t$ is large.

«Analysis»

Variation in $\rho$ in technique of the present invention

Experimental effectiveness of the technique of the present invention has been confirmed in the above section. The present section shows that in the technique of the present invention, the criterion p (see expression (4)) of the searching efficiency of LSH described above decreases as compared to the conventional LSH, and analytically shows effectiveness of the technique of the present invention.

Since LSH uses a locality-sensitive hash function, if a near neighbor point around focused data is searched for in a copy-source hash function group as in the step (2) in FIG. 4, a point closer to the focused data is searched for with a higher probability, and a farther point is searched for with a lower probability. Therefore, in a copy-destination hash function group, data belonging to the same bin as a query increases. That is, the probability $p_1$ that a point present within the distance $r_1$ from a query q has the same hash value as that of the query, and the probability $p_2$ that a point present beyond the distance $r_2$ from a query q has the same hash value as that of the query, both increase. However, in an area closer to the focused data, a larger number of data pieces are searched for. Therefore, $p_1$ becomes greater than $p_2$. As a result, p decreases.

Relationship between bucket number $L_2$ of copy-source hash function groups and threshold value t

In step (3) in FIG. 4, only data for which the number of times the data is searched for is equal to or larger than a threshold value t is additionally stored into a database. If the threshold value used at this time can be properly adjusted, it becomes possible to selectively add a point that is highly likely to be selected as a near neighbor point, thereby further promoting reduction of p. The present section considers what threshold value is desirable.

Here, it will be assumed that when searching is performed in $L_2$ buckets of copy-source hash function groups, a data piece Y is found y times. A probability P(y) of occurrence of such a phenomenon is given by binominal distribution shown by the following expression.

[Mathematical 6]

$$\mathrm{P}(y) = \binom{L_2}{y} p^y (1-p)^{L_2-y} \qquad (5)$$

Here,

[Mathematical 7]

$$\binom{L_2}{y} = \frac{L_2!}{y!(L_2-y)!} \qquad (6)$$

The probability p is a function of the distance from focused data to the data Y, and increases as the distance therebetween is shortened.

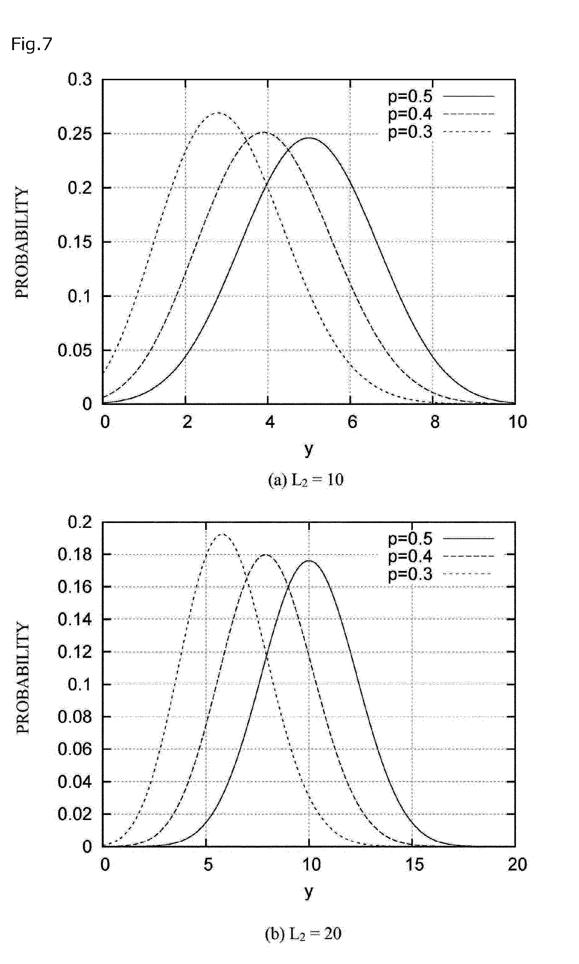

FIG. 7 shows a result of plotting expression (5), in which the vertical axis indicates the probability P(y) that the data Y is searched for y times in copy-source hash function groups. When calculation is performed by substituting values into the expression, it is found that the distribution of points close to data Y having a large probability p (for example, p = 0.5) and the distribution of points far from data Y having a small probability p (for example, p = 0.3) are different, and the number of times y such close points are searched for is larger than that for such far points. In addition, the relationship between the threshold value t for the number of times of searching which determines whether or not to additionally add each data into a database, and a probability that the data is selected, will be described. The probability difference between points close to Y and points far from Y is greater in the case where the threshold value t is equal to an expected value $0.5L_2$ corresponding to p = 0.5 (that is, t = 5 in the case of $L_2 = 10$ shown in FIG. 7(a) and t = 10 in the case of $L_2 = 20$ shown in FIG. 7(b)), than in the case of t = 1. Therefore, it is found that the threshold value needs to be set appropriately and such an appropriate value may possibly be determined based on a possibility that a nearest neighbor point is searched for.

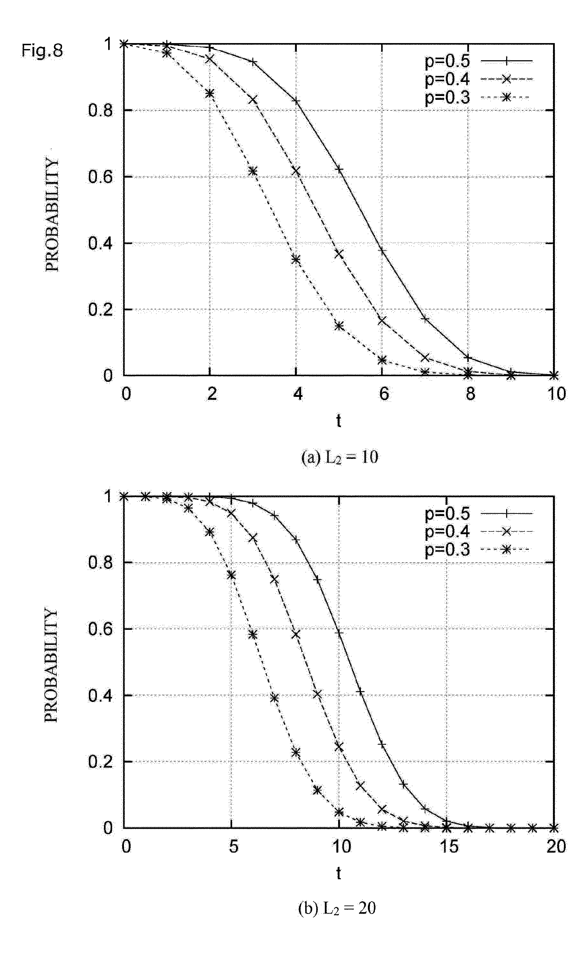

Next, the influence of the bucket number $L_2$ in copy-source hash function groups on the performance of the technique of the present invention will be described. In the case where the threshold value t is set at the expected value $0.5L_2$ corresponding to p = 0.5 as described above, the probability difference between points close to Y and points far from Y is greater in FIG. 8(b) than in FIG. 8(a). Therefore, it is considered that in some cases, if the bucket number $L_2$ in copy-source hash function groups is increased, the performance can be improved. This coincides well with the experiment results.

Various modifications of the present invention may be attained other than the above mentioned embodiment. Such modifications should not be deemed to be out of the scope of the present invention. The present invention should include all the modifications within the scope of the claims and their equivalents, and within the scope of the invention.

INDUSTRIAL APPLICABILITY

The present invention provides a technique for reducing calculation time and memory use amount required for realizing the same accuracy, by redundant storage of data stored in a database, in LSH which is an approximate nearest neighbor search technique based on hash. By the experiments, effectiveness of the technique of the present invention has been confirmed, and further, improvement in the performance has been analytically shown by using the criterion p for searching efficiency of LSH used in Non-Patent Literature 1.

By using the technique of the present invention, calculation time and memory use amount needed for searching for data by approximate nearest neighbor search can be reduced as compared to the conventional technique.

Although it may be intuitively predicted that redundant storage of data will adversely affect the performance, the performance is improved contrary to the prediction. This is because only near neighbor points around a query (a predicted value thereof) are selectively stored into a bucket, and thereby a probability that a true nearest neighbor point is contained in the same bucket as the query increases. In addition, the fact that increase in calculation time and increase in memory use amount are slight is also considered as the reason. Analytically, it is considered that the reason is because the value p as the criterion for searching efficiency of LSH is successfully reduced.

The present invention can be understood as a method for data processing performed in such a manner that a computer operates together with hardware such as a memory to execute storage processing for image data into a database as described above. In addition, the present invention in another aspect can be understood as a device for data processing composed of the computer, the hardware, and the like.

DESCRIPTION OF THE REFERENCE CHARACTERS

11    correspondence table
a     vector
p     data
q     query

**Claims**

1. A storage method for database, comprising steps of, by a computer:

    extracting a plurality of feature vectors from image data, each feature vector representing a feature of the image data; and
    storing the extracted feature vectors in conjunction with the image data into a database,
    wherein the storing step includes sub-steps of:

        generating L groups of hash tables, each group being composed of K hash tables (K and L are integers equal to or greater than 2), to store each feature vector into one of a plurality of bins for sort of the feature vectors in each hash table;
        storing each feature vector into each corresponding hash table of each group;
        determining one of the groups as a copy destination, other groups as copy sources, and sort by a combination of the storage bins of the K hash tables of each group as a bucket;

            (1) focusing on one of the feature vectors;
            (2) specifying any other feature vectors stored in the same bucket as the focused feature vector in each copy source;
            (3) counting the number of groups in which each of the other feature vectors and the focused feature vector are stored in the same bucket and selecting each of the other feature vectors for which the number is equal or greater than a predetermined threshold value;
            (4) storing each of the feature vectors selected in the sub-step (3) into each bin in the copy destination in which the focused feature vector is stored, in case where the selected feature vector has not been stored into the bin; and

        deleting the hash tables of the copy sources after focusing a predetermined number of the feature vectors and executing the sub-steps (1) to (4) for each focused feature vector, and

    wherein the database is used for, when image data as a retrieval query is given, after a plurality of query vectors representing a feature of the image data are extracted, finding a feature vector that matches to each query vector from the database by approximate nearest neighbor search, to determine the image corresponding to the retrieval query.

2. The method according to claim 1, wherein the approximate nearest neighbor search is processing for applying K hash functions to each query vector to determine a bucket, obtaining at least one feature vector stored in the bucket, and comparing the query vector with the feature vector.

3. The method according to claim 1 or 2, wherein the storing step determines a feature vector to be focused on by using uniform random numbers.

4. The method according to any one of claims 1 to 3,
    wherein the storing step refrains from storing the feature vector selected in the sub-step (3) into each bin in the copy destination in which the focused feature vector is stored, in case where the selected feature vector has been stored into the bin.

5. The method according to any one of claims 1 to 4, wherein
the storing step is executed based on the numbers K and L that are determined in advance, and
the sub-steps (1) to (4) are executed for feature vectors of a number corresponding to a predetermined ratio with respect to the feature vectors extracted from the image data.

6. The method according to any one of claims 1 to 5, wherein
the database includes a correspondence table storing vector data of each feature vector and an identifier of said feature vector in an associated manner, and the hash tables, and
each hash table indicates each feature vector stored in each bin by using the identifier thereof.

7. The method according to any one of claims 1 to 6, wherein
the approximate nearest neighbor search calculates a distance between the query vector and each feature vector, and determines a nearest neighbor feature vector based on the calculated distances.

8. A storage device for database, comprising:

a processing section for extracting a plurality of feature vectors from image data, each feature vector representing a feature of the image data; and
a storage section for storing the extracted feature vectors in conjunction with the image data into a database, wherein the storage section performs operations of:

generating L groups of hash tables, each group being composed of K hash tables (K and L are integers equal to or greater than 2), to store each feature vector into one of a plurality of bins for sort of the feature vectors in each hash table;
storing each feature vector into each corresponding hash table of each group;
determining one of the groups as a copy destination, other groups as copy sources, and sort by a combination of the storage bins of the K hash tables of each group as a bucket;

(1) focusing on one of the feature vectors;
(2) specifying any other feature vectors stored in the same bucket as the focused feature vector in each copy source;
(3) counting the number of groups in which each of the other feature vectors and the focused feature vector are stored in the same bucket and selecting each of the other feature vectors for which the number is equal or greater than a predetermined threshold value;
(4) storing each of the feature vectors selected in the operation (3) into each bin in the copy destination in which the focused feature vector is stored, in case where the selected feature vector has not been stored into the bin; and

deleting the hash tables of the copy sources after focusing a predetermined number of the feature vectors and executing the operations (1) to (4) for each focused feature vector, and

wherein the database is used for, when image data as a retrieval query is given, after a plurality of query vectors representing a feature of the image data are extracted, finding a feature vector that matches to each query vector from the database by approximate nearest neighbor search, to determine the image corresponding to the retrieval query.

Fig.1

(a) IN CASE OF ONE HASH FUNCTION

(b) IN CASE OF CREATING ONE BUCKET BY TWO HASH FUNCTIONS

(c) IN CASE OF TWO BUCKETS

# Fig.2

PROBABILITY OF BEING CONTAINED IN DIFFERENT BIN FROM THAT FOR QUERY IS EQUAL TO OR GREATER THAN $1 - p_2$

PROBABILITY OF BEING CONTAINED IN SAME BIN AS QUERY IS EQUAL TO OR GREATER THAN $p_1$

BUCKET CONTAINING QUERY

QUERY

$r_1$

$r_2$

EP 2 717 221 A1

Fig.3

ACCURACY: HIGH

CALCULATION TIME: LONG

MEMORY USE AMOUNT: LARGE

COPY
DESTINATION

ACCURACY: HIGH

CALCULATION TIME: SHORT

MEMORY USE AMOUNT: SMALL

COPY
SOURCE

(a)

COPY DATA IN
BUCKETS

(b)

DELETE BUCKETS OF
COPY SOURCE

(c)

EP 2 717 221 A1

Fig.4

COPY-
DESTINATION
HASH FUNCTION
GROUP

COPY-
DESTINATION
HASH FUNCTION
GROUP

(1) SELECT DATA
TO BE FOCUSED

SELECT DATA Y

(2) SEARCH FOR
FOCUSED DATA

(3) DETERMINE NUMBER
OF TIMES EACH DATA IS
SEARCHED FOR

(4) STORE DATA FOR WHICH
NUMBER OF TIMES OF
SEARCHING IS EQUAL TO OR
LARGER THAN THRESHOLD
VALUE

NUMBER OF TIMES

THRESHOLD
VALUE

DIMENSION

Fig.5

(a) $L_2 = 1$, $t = 1$.

(b) $L_2 = 20$, $t = 1$.

(c) $L_2 = 20$, $t = 10$.

Fig.6

(a) $L_2 = 1$, $t = 1$.

(b) $L_2 = 20$, $t = 1$.

(c) $L_2 = 20$, $t = 10$.

Fig.7

(a) $L_2 = 10$

(b) $L_2 = 20$

Fig.8

(a) $L_2 = 10$

(b) $L_2 = 20$

Fig.9

| | International application No. |
|---|---|
| **INTERNATIONAL SEARCH REPORT** | PCT/JP2012/062406 |

**A. CLASSIFICATION OF SUBJECT MATTER**
*G06T1/00*(2006.01)i, *G06F17/30*(2006.01)i

According to International Patent Classification (IPC) or to both national classification and IPC

**B. FIELDS SEARCHED**

Minimum documentation searched (classification system followed by classification symbols)
G06T1/00, G06F17/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
JSTPlus(JDreamII)

**C. DOCUMENTS CONSIDERED TO BE RELEVANT**

| Category* | Citation of document, with indication, where appropriate, of the relevant passages | Relevant to claim No. |
|---|---|---|
| T | Masakazu IWAMURA, Tomoyuki MUTO, Koichi KISE, "Duplicate Registration of Data in Approximate Nearest Neighbor", IEICE Technical Report, 30 May 2011 (30.05.2011), vol.111, no.76 (DE2011 1-26), pages 111 to 116 | 1-8 |
| A | Tomoyuki MUTO, Masashi TADA, Masakazu IWAMURA, Koichi KISE, "Efficient Approximate Nearest Neighbor Search Based on Accessing Neighboring Buckets", IEICE Technical Report, 19 June 2009 (19.06.2009), PRMU2009-53, pages 83 to 88 | 1-8 |
| A | JP 2008-165714 A (KDDI Corp.), 17 July 2008 (17.07.2008), abstract & US 2008/0168059 A1 | 1-8 |

☐ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 06 July, 2012 (06.07.12) | 17 July, 2012 (17.07.12) |

| Name and mailing address of the ISA/<br>Japanese Patent Office | Authorized officer |
|---|---|
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. DATAR ; N. IMMORLICA ; P. INDYK ; V.S. MIR-ROKNI.** Locality-sensitive hashing scheme based on p-stable distributions. *Proc. 20th annual symposium on Computational geometry,* 2004, 253-262
- **KISE KOICHI ; NOGUCHI KAZUTO ; IWAMURA MASAKAZU.** Robust and Efficient Recognition of Low Quality Images by Increasing Reference Feature Vectors. *IEICE Transactions,* August 2010, vol. J93-D (8), 1353-1363
- **KATAYAMA NORIO ; SATOH SHIN'ICHI.** SR-Tree: An Index Structure for Nearest Neighbor Searching of High-Dimensional Point Data. *IEICE Transactions,* August 1997, vol. J80-D 1 (8), 703-717
- **S. ARYA ; D.M. MOUNT ; N.S. NETANYAHU ; R. SILVERMAN ; A.Y. WU.** An optimal algorithm for approximate nearest neighbor searching in fixed dimensions. *Journal of the ACM,* November 1998, vol. 45 (6), 891-923
- **INDYK ; R. MOTWANI.** Approximate nearest neighbor: towards removing the curse of dimensionality. *Proc 30th Symposium on Theory of Computing,* 1998, 604-613
- **Y. WEISS ; A. TORRALBA ; R. FERGUS.** Spectral hashing. *Advances in Neural Information Processing Systems,* 2008, vol. 21, 1753-1760
- **A.Z. BRODER ; M. CHARIKAR ; A.M. FRIEZE ; M. MITZENMACHER.** Min-wise independent permutations. *Journal of Computer and System Sciences,* 2000, vol. 60, 630-659
- **WADA TOSHIKAZU.** Classification using space decomposition and learning of non-linear mapping: (1) Acceleration Method for Nearest Neighbor Classification based on Space Decomposition. *Journal of Information Processing,* August 2005, vol. 46 (8), 912-918
- **R. GROSS ; I. MATTHEWS ; J. COHN ; T. KANADE ; S. BAKER.** Multi-pie. *Proc. 8th IEEE Int'l Conf. on Automatic Face and Gesture Recognition,* 2008
- **T. MITA ; T. KANEKO ; B. STENGER ; O. HORI.** Discriminative feature co-occurrence selection for object detection. *IEEE Trans. PAMI,* July 2008, 1257-1269
- **T. KOZAKAYA ; O. YAMAGUCHI.** Face recognition by projection-based 3d normalization and shading subspace orthogonalization. *Proc 7th Int' Conf. on Automatic Face and Gesture Recognition,* 2006, 163-168
- **T. AHONEN ; A. HADID ; M. PIETIKAINEN.** Face description with local binary patterns: Application to face recognition. *IEEE Trans. PAMI,* December 2006, vol. 28 (12), 2037-2041